# EUROPÄISCHE PATENTANMELDUNG

(11) **EP 2 769 802 A1**
(43) Veröffentlichungstag der Anmeldung: **27.08.2014**
(21) Anmeldenummer: 13156355.3
(22) Anmeldetag: 22.02.2013
(51) Int. Cl.: B23K 35/30, C22C 19/05

(54) **Verbessertes Schweißmaterial bezüglich der Schweißbarkeit und Kornstabilisierung, Verfahren und Bauteil**

(71) Anmelder: Siemens Aktiengesellschaft, 80333 München (DE)
(72) Erfinder: Melzer-Jokisch, Torsten, 15366 Neuenhagen bei Berlin (DE); Ott, Michael, 45470 Mülheim an der Ruhr (DE)

(57) **Zusammenfassung**

Durch die optimierte Zusammensetzung von Tantal, Aluminium, Titan sowie der Zugabe von Hafnium, Zirkon, Lanthan und optional Cer wird ein Schweißmaterial vorgeschlagen, das sich gut schweißen lässt und gute mechanische Eigenschaften aufweist.

## Beschreibung

Die Erfindung betrifft ein Schweißmaterial, das eine verbesserte Schweißbarkeit und Kornstabilisierung aufweist.

Beim Schweißen wird oft Schweißzusatzmaterial verwendet um einen Riss zu verschließen oder um eine Auftragsschweißung durchzuführen.

Zurzeit findet Laserauftragsschweißverfahren vermehrt die Anwendung.

Turbinenschaufel für Höchsttemperaturanwendungen weisen oft eine kolumnare oder einkristalline Struktur auf, wie aus der EP 1 438 441 B1 bekannt ist.

Generell besteht das Problem bei diesen Werkstoffen in der Schweißbarkeit und den späteren mechanischen Eigenschaften. Eine gute Schweißbarkeit bedingt oft eine Herabsetzung der mechanischen Eigenschaften oder umgekehrt.

Es ist daher Aufgabe der Erfindung dieses Problem zu lösen.

Die Aufgabe wird gelöst durch eine Legierung gemäß Anspruch 1, ein Verfahren zum Schweißen gemäß Anspruch 7 und ein Bauteil nach Anspruch 10.

In den Unteransprüchen sind weitere vorteilhafte Maßnahmen aufgelistet, die beliebig miteinander kombiniert werden können, um weitere Vorteile zu erzielen.

Durch die Legierung, das Verfahren und das Bauteil sind gute Schweißungen gegeben.

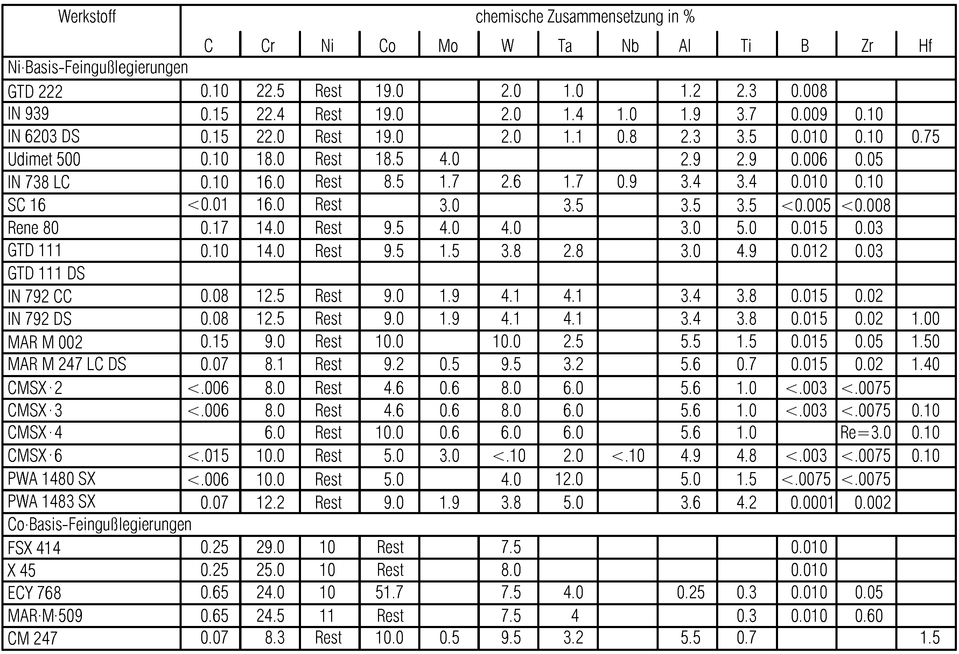

Es zeigt die Figur eine Liste von Superlegierungen.

Die Figur und die Beschreibung stellen nur Ausführungsbeispiele der Erfindung dar.

Die nickelbasierte Legierung, die als Schweißmaterial verwendet wird, weist zumindest folgende Anteile auf (Angaben in Gew.%) :

| | |
|---|---|
| Chrom (Cr) | 9,5% - 14,0 insbesondere 12,0%, |
| Kobalt (Co) | 7,0% - 11,0%, insbesondere 9,0%, |
| Molybdän (Mo) | 1,0% - 2,5%, insbesondere 1,85%, |
| Wolfram (W) | 3,0% - 6,0%, insbesondere 3,7%, |
| Hafnium (Hf) | 0,5% - 2,0%, insbesondere 1%, |
| Tantal (Ta) | 4,7% - 5,7%, insbesondere 5,2%, |
| Aluminium (Al) | 2,9% - 4,4%, insbesondere 3,4%, |
| Titan (Ti) | 3,4% - 4,9%, insbesondre 3,9% |
| Kohlenstoff(C) | 0,05% - 0,11%, insbesondere 0,06% - 0,09%, |
| ganz insbesondere | 0.09% |
| Bor (B) | max. 0,0175%, insbesondere 0,003% bis 0,014% |
| Zirkon (Zr) | 75 ppm bis 1%, insbesondere 0,1%, |
| optional | |
| Cer (Ce) | (0,05 ± 0,02)%, insbesondere 0,05%, |
| Lanthan (La) | (0,05 ± 0,02)%, insbesondere 0,05% |
| Niob (Nb) | max 1%. |

Durch die Auswahl dieser Elemente und Zugabe von Hafnium (Hf), Kohlenstoff (C), Bor (B), Zirkon (Zr) und/oder Cer (Ce) sowie Lanthan (La) werden die Korngrenzen gefestigt, was zu Festigkeitssteigerung der Schweißung führt.

Vorzugsweise findet ein solches Schweißmaterial Anwendung beim Laserauftragsschweißen, bei dem Material, insbesondere Pulver, aus dieser Legierung zugeführt, aufgeschmolzen und auf dem Substrat (nickelbasierte Legierung, siehe auch Figur) erstarren gelassen wird.

Vorzugsweise wird dieses Material beim Auftragsschweißen von gerichtet erstarrten Strukturen wie kolumnaren Strukturen, insbesondere von einkristallinen Strukturen verwendet und dann insbesondere auch gerichtet erstarrt gelassen werden.

## Patentansprüche

1. Nickelbasierte Schweißlegierung, die zumindest aufweist (in Gew.-%):
| | |
|---|---|
| Chrom (Cr) | 9,5% - 14,0 insbesondere 12,0%, |
| Kobalt (Co) | 7,0% - 11,0%, insbesondere 9,0%, |
| Molybdän (Mo) | 1,0% - 2,5%, insbesondere 1,85%, |
| Wolfram (W) | 3,0% - 6,0%, insbesondere 3,7%, |
| Hafnium (Hf) | 0,5% - 2,0%, insbesondere 1%, |
| Tantal (Ta) | 4,7% - 5,7%, insbesondere 5,2%, |
| Aluminium (Al) | 2,9% - 4,4%, insbesondere 3,4%, |
| Titan (Ti) | 3,4% - 4,9%, insbesondere 3,9% |
| Kohlenstoff(C) | 0,05% - 0,11%, insbesondere 0,06% - 0,09%, |
| ganz insbesondere | 0.09% |
| Bor (B) | max. 0,0175%, insbesondere 0,003% bis 0,014% |
| Zirkon (Zr) | 75ppm bis 1%, insbesondere 0,1%, optional |
| Cer (Ce) | (0,05 ± 0,02)%, insbesondere 0,05%, |
| Lanthan (La) | (0,05 ± 0,02)%, insbesondere 0,05% |
| Niob (Nb) | max 1%. |

2. Legierung nach Anspruch 1,
die mindestens 0,003% Bor (B) aufweist,
insbesondere 0.0125% Bor (B).

3. Legierung nach einem oder beiden der Ansprüche 1 oder 2, die Cer (Ce) enthält,
insbesondere kein Lanthan (La) enthält.

4. Legierung nach einem oder mehreren der Ansprüche 1 bis 3,
die Lanthan (La) enthält,
insbesondere kein Cer (Ce) enthält.

5. Legierung nach einem oder mehreren der Ansprüche 1 bis 4,
die Lanthan (La) und Cer (Ce) enthält.

6. Legierung nach einem oder mehreren der Ansprüche 1 bis 5,
die aus Nickel, Chrom, Kobalt, Molybdän, Wolfram, Hafnium, Tantal, Aluminium, Titan, Kohlenstoff, Zirkon und optional Bor, Cer und/oder Lanthan besteht.

7. Verfahren zum Schweißen von nickelbasierten oder kobaltbasierten Substraten,
bei dem eine Schweißlegierung gemäß nach einem oder mehreren der Ansprüche 1 bis 6 verwendet wird.

8. Verfahren nach Anspruch 7,
bei dem eine kolumnare oder einkristalline Struktur in einem geschweißten Bereich erzeugt wird.

9. Verfahren nach einem oder beiden der Ansprüche 7 oder 8, bei dem das Substrat,
auf dem die Auftragsschweißung durchgeführt wird,
eine kolumnare oder einkristalline Struktur aufweist.

10. Bauteil
mit einem geschweißten Bereich,
der eine Legierung nach einem oder mehreren der Ansprüche 1 bis 6 aufweist.

11. Bauteil nach Anspruch 10,
das als Substrat eine kobalt- oder nickelbasierte Legierung aufweist.

12. Bauteil nach einem oder mehreren der Ansprüche 10 oder 11,
das als Substrat eine kolumnare oder einkristalline Struktur aufweist.

13. Bauteil nach einem oder mehreren der Ansprüche 10 oder 11,
das als Substrat eine ungerichtete, polykristalline Struktur aufweist.

14. Bauteil nach einem oder mehreren der Ansprüche 10 bis 13,
das in seinem geschweißten Bereich eine gerichtet erstarrte Struktur aufweist.

15. Bauteil nach einem oder mehreren der Ansprüche 10 bis 13,
das in seinem geschweißten Bereich eine ungerichtet erstarrte Struktur aufweist.
